# EUROPEAN PATENT APPLICATION

(11) **EP 4 775 377 A1**
(43) Date of publication of application: **15.07.2026**
(21) Application number: 25151807.2
(22) Date of filing: 14.01.2025
(51) Int. Cl.: B29C 48/39, B29C 48/40, B29C 48/50, B29B 7/48, B29B 7/76, B29C 48/285, B29C 48/525, B29C 48/80

(54) **EXTRUSION DEVICE CAPABLE OF EMPLOYING COMPOSITE INPUT METHOD**

(71) Applicant: PLAMIX Co., Ltd, Hwaseong-si, Gyeonggi-do 18545 (KR)
(72) Inventor: SHIN, Mincheol, 05070 Seoul (KR)
(74) Representative: BCKIP Part mbB

(57) **Abstract**

An embodiment of the present disclosure provides an extrusion device 100 capable of employing a composite input method, wherein the device 100 includes: a main body unit 110 that forms an exterior and has a material input unit 120 formed at an upper portion thereof; an extrusion unit 101 including a pair of extrusion screws 155 provided inside the main body unit 110; and a conical extrusion unit 102 that is movably provided on one side of the main body unit 110 and selectively enables a raw material input into the material input unit 120.

## Description

### BACKGROUND

### Field

The present disclosure relates to an extrusion device, and more specifically, to an extrusion device capable of employing a composite input method configured to easily separate and operate, in a merged manner, a main extrusion unit that has an extrusion screw applied inside to discharge and extrude a material along a straight line section from one side to the other side and a conical extrusion unit that moves the material through an extrusion unit in a cone (conical) form to mix the material more uniformly and increase melting efficiency.

### Related Art

An extrusion unit is core industrial equipment used to melt and process a thermoplastic material to make products of various forms. The equipment is widely utilized in a processing process of many materials such as plastic, rubber, food or metal, and plays an important role in improving product quality and productivity. The extrusion unit is configured of an injection unit, screw, barrel, heater, die, or the like, each of which performs specific work such as raw material supply, melting, compression, molding, or the like.

The extrusion unit is designed in various forms depending on a material to be processed and an application field. Each of the most widely used monoaxial extrusion unit and biaxial extrusion unit emphasizes a simple structure and economic feasibility or focuses on increasing mixing and dispersing abilities.

The monoaxial extrusion unit has a simple structure and is easy to maintain, and thus is suitable for mass production and standardized product manufacturing. In contrast, the biaxial extrusion unit is excellent in mixing performance, and thus is mainly used for manufacturing composite materials or for high value-added processes including a chemical reaction.

A conical extrusion unit has a unique design that is different from the conventional linear extrusion unit. The screw and barrel are in cone forms, and thus the diameter of the screw changes gradually. This design maximizes compression and transfer efficiency, and optimizes the utilization of thermal and mechanical energy in an extrusion process, thereby enabling uniform melting and processing of a material and efficiently processing a composite material or a raw material with high viscosity.

The major benefit of the conical extrusion unit is a high compression ratio and excellent mixing performance. The conical extrusion unit is configured to gradually compress a raw material inside the barrel, thereby enabling efficient mixing and dispersion. This characteristic is particularly advantageous in processing a raw material with diverse physical characteristics or difficult processing, such as composite materials or recycled materials.

In addition, the lengths of the screw and barrel are relatively short, thereby saving installation space and reducing energy consumption.

In comparison with a general extrusion unit, the conical extrusion unit is suitable mainly for processing special materials such as recycled plastic, rubber, or composite material. In addition, the conical extrusion unit enables mixing of high quality necessary for manufacturing a high strength or high functional product.

In other words, the general extrusion unit is more suitable for mass production and uniform material processing, and has a relatively simple design, and thus is easy to maintain and is advantageous in terms of cost. In contrast, the conical extrusion unit would require a somewhat high initial cost because of a complex design and a special work condition. However, the conical extrusion unit may stably process difficult materials, and thus is differentiated.

The conical extrusion unit has been featured extensively in various application fields. In particular, the conical extrusion unit plays an important role in processing recycled materials, manufacturing composite materials and producing small components. For example, the conical extrusion unit exhibits excellent performance in processing ununiformed recycled plastic with high viscosity and manufacturing composite materials including a reinforcing material such as glass fiber. In addition, the conical extrusion unit enables precise and uniform processing, and thus is also suitable for producing small components such as electronic equipment and automobile parts.

The aforementioned general extrusion unit and the conical extrusion unit have each different advantage and disadvantage.

It is important to use a suitable extrusion unit in consideration of a characteristic, production environment, a final use of a product, or the like when equipment is selected. The unique design and performance of the conical extrusion unit supplement the conventional linear extrusion unit, and plays an important role in manufacturing complex and highly functional products.

### (Related art document)

(Patent document 1) Korean Patent No. 10-2498359

### SUMMARY

The present disclosure has been devised to address the above issue and limitation associated with the related art. An aspect of the present disclosure is directed to providing an extrusion device capable of employing a composite input method configured to separate and operate, in a merged manner, a general extrusion unit and a conical extraction unit as needed.

The aspects of the present disclosure are not limited to those mentioned above, and other aspects not mentioned herein will be clearly understood by those skilled in the art from the following description.

An embodiment of the present disclosure provides an extrusion device capable of employing a composite input method, wherein the device includes: a main body unit that forms an exterior and has a material input unit formed at an upper portion thereof; an extrusion unit including a pair of extrusion screws provided inside the main body unit; and a conical extrusion unit that is movably provided on one side of the main body unit and selectively enables a raw material input into the material input unit.

Herein, the material input unit is formed separably, is formed in a rectangular box shape as a whole when united, and is divided into a first input unit and a second input unit in which an interior space thereof is in communication with an interior space of the main body unit. When the first input unit and the second input unit are united, hemispherical first and second injection units formed in cylinder forms as a whole may be provided in each of the first input unit and the second input unit.

The main body unit may be provided with a piston unit and a cylinder unit connected to the second input unit so that the second input unit and the second injection unit are separated from or combined with the first input unit and the first injection unit.

In addition, an ultrasonic heating unit may be provided inside the main body unit.

In addition, the ultrasonic heating unit may be provided in a plural number at predetermined intervals in a lengthwise direction of the main body unit.

In addition, the ultrasonic heating unit may be provided at each of an upper side and a lower side inside the main body unit.

In addition, an instruction board coated with a thermochromic pigment that reversibly changes color depending on a temperature may be provided at a preset position on a side portion of the main body unit.

In addition, there may be further provided a transparent cover unit that covers the instruction board.

In addition, a plurality of through holes may be provided at regular intervals on a side portion of the main body unit.

In addition, there may be further provided a closing bolt that closes the through hole.

### ADVANTAGEOUS EFFECTS

According to an extrusion device capable of employing a composite input method according to an embodiment of the present disclosure configured as above, there are following benefits.

First, the process of transferring, melting, and extruding raw materials can be processed in one device, thereby greatly improving process efficiency. In particular, the main extrusion unit and the conical extrusion unit are designed as a separable and combinable structure, thereby flexibly responding to various raw materials and processing conditions.

Second, by using the structure of the extrusion unit within the conical extrusion unit, the mixing and melting efficiency of raw materials is maximized, contributing to increasing the quality of a final product. The extrusion device is not configured separately from the main extrusion unit but has an integrated structure, thereby saving space and equipment costs.

The benefits of the present disclosure are not limited to those mentioned above, and other benefits not mentioned herein will be clearly understood by those skilled in the art from the following description.

### BRIEF DESCRIPTION OF THE DRAWINGS

FIG. 1 is a perspective view of a state in which a main extraction unit and a conical extrusion unit forming an extrusion device capable of employing a composite input method according to an embodiment of the present disclosure are separated.
FIG. 2 is a plan view of a state in which a main extraction unit and a conical extrusion unit forming an extrusion device capable of employing a composite input method according to an embodiment of the present disclosure are separated.
FIG. 3 is a plan view of a state in which a main extraction unit and a conical extrusion unit forming an extrusion device capable of employing a composite input method according to an embodiment of the present disclosure are combined.
FIG. 4 is a plan view of a state in which a main extraction unit and a conical extrusion unit forming an extrusion device capable of employing a composite input method according to another embodiment of the present disclosure are separated.
FIG. 5 is a longitudinal sectional view of the main extrusion unit of FIG. 4.
FIG. 6 is a perspective view of a state in which a main extraction unit and a conical extrusion unit forming an extrusion device capable of employing a composite input method according to yet another embodiment of the present disclosure are separated.
FIG. 7 is a perspective view of a state in which an instruction module is combined with a closing bolt.

### DESCRIPTION OF EXEMPLARY EMBODIMENTS

Hereinafter, as a means to achieve the purposes of the present disclosure, preferred embodiments of the present disclosure will be described in detail with reference to the accompanying drawings. In describing the present embodiments, like reference numerals and symbols denote like elements, and additional descriptions thereof will be omitted.

Various embodiments of the present disclosure may make various changes and have various embodiments, and specific embodiments are illustrated in the drawings and related detailed descriptions are described in detail. However, this is not intended to limit the various embodiments of the present disclosure to specific embodiments, and should be understood to include all changes and equivalents or substitutes included in the spirit and technical scope of the various embodiments of the present disclosure.

Hereinafter, preferred embodiments of the present disclosure will be described in detail using the accompanying drawings.

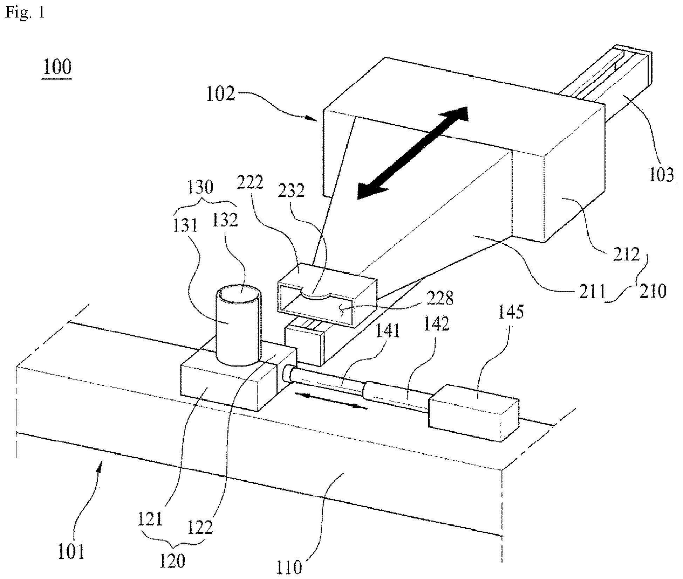

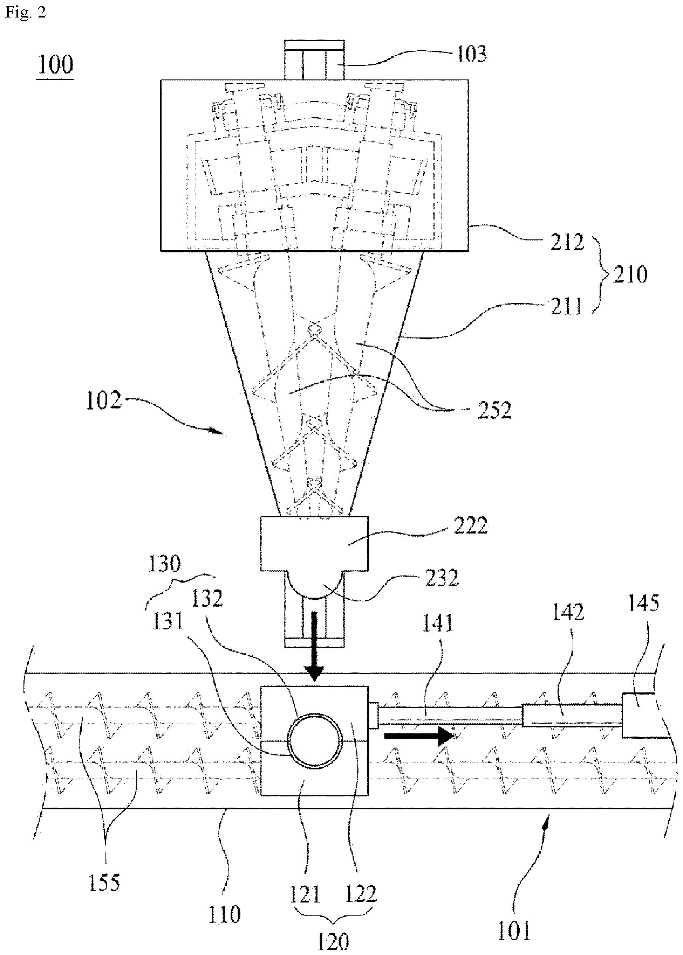

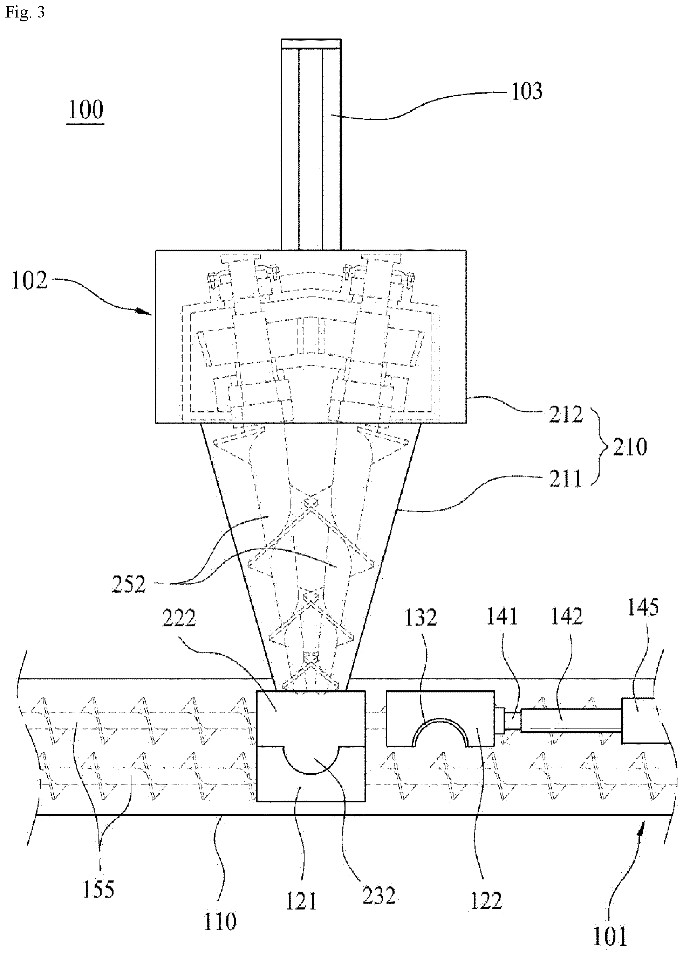

FIG. 1 is a perspective view of a state in which a main extraction unit and a conical extrusion unit forming an extrusion device capable of employing a composite input method according to an embodiment of the present disclosure are separated. FIG. 2 is a plan view of a state in which a main extraction unit and a conical extrusion unit forming an extrusion device capable of employing a composite input method according to an embodiment of the present disclosure are separated. FIG. 3 is a plan view of a state in which a main extraction unit and a conical extrusion unit forming an extrusion device capable of employing a composite input method according to an embodiment of the present disclosure are combined.

As illustrated, an extrusion device 100 capable of employing a composite input method according to an embodiment of the present disclosure includes a main extrusion unit 101 and a conical extrusion unit 102.

The main extrusion unit 101 forms the main configuration of the extrusion unit of an embodiment of the present disclosure, and is provided with a main body unit 110 in which a pair of extrusion screws 155 is installed therein along a lengthwise direction. The main body unit 110 performs the basic function of transferring, melting and extruding raw materials put therein, and is designed to maintain high durability and efficiency during work.

The main body unit 110 is formed in the shape of a square tube having a predetermined length from one side to the other side. The pair of extrusion screws 155 are disposed in a double row inside, and the material input into the main body unit 110 is mixed and extruded to the other side and discharged according to the rotation of the extrusion screws 155.

Although not illustrated in detail, one side of the main body unit 110 is provided with a driving unit that rotates the extrusion screw 155, and the other side of the main body unit 110 is provided with an outlet that extrudes and discharges the input material. In addition, a heating unit according to a known method for heating the inside of the main body unit 110 may be applied.

In addition, a cooling unit for cooling the material discharged to the other external side of the main extrusion unit 101 and a cutting unit may be applied sequentially.

A material input unit 120 for inputting the materials to mix and extrude into the main body unit 100 is provided in an upper portion of the main body unit 110.

Herein, the material input unit 120 forms an interior space in communication with an inside of the main body unit 110 as a whole when combined, and is divided into a first input unit 121 and a second input unit 122 formed in a rectangular box shape.

In addition, the first input unit 121 is provided in its upper side with a first injection unit 131, and the second input unit 122 is provided in its upper side with a second injection unit 132. The first injection unit 131 and the second injection unit 132, when combined with each other, form a cylinder or, although not illustrated, a cylindrical hopper.

In addition, the second input unit 122 is connected to a moving unit including an operating unit 145, a piston unit 141, and a cylinder unit 142 provided on an upper portion of the main body unit 110, and is configured so that the second input unit 122 is able to move while being separated from the first input unit 121 along a lengthwise direction of the main body unit 110 according to the movement of the piston unit 141.

In this connection, the second inj ection unit 132 also moves together with the second input unit 122.

Next, the conical extrusion unit 102 is provided with a case unit 210 that forms an exterior and is disposed on one side of the main extrusion unit 101. Herein, the case unit 210 is composed of a conical case 211 and a rear case 212, in which a pair of conical screws 252 are installed inside the case unit 210.

The driving unit (not shown) that rotates the conical screw 252 is connected to the rear case 212.

The conical extrusion screw 102 as such is designed to uniformly mix and melt raw materials inside, and is particularly effective in processing a complex composite material or raw material with high viscosity. The design of the conical extrusion unit according to a known technology may be applied and is obvious to those skilled in the art, so a detailed description thereof is omitted.

The case unit 210 is provided with a replacement input unit 222 having the same shape as the second input unit 122 on a discharge unit side from which raw materials are discharged, in other words, on a main extrusion unit 101 side, and the replacement input unit 222 is provided with a hemispherical closing unit 232 having a size corresponding to a hemispherical opening of the first injection unit 131.

In addition, a rail unit 103 is provided in a lower portion of the conical extrusion unit 102, and the conical extrusion unit 102 is configured to move along the rail unit 103 by a hydraulic or ball screw method. When moving along the rail unit 103, the replacement input unit 222 and the hemispherical closing unit are configured to be moved to a position of the second input unit 122.

In other words, when the conical extrusion unit 102 is separated from the main extrusion unit 101, the material is injected into the material input unit 120 and the injection unit 130, and the main extrusion unit 101 is used as a general biaxial extrusion device. When necessary, the conical extrusion unit 102 is moved in a state where the second input unit 122 is separated from the first input unit 121 according to the operation of the piston unit 141, the replacement input unit 222 is moved to the position of the second input unit 122 and combined with the first input unit 121, and the extrusion unit is used in a state where the conical extrusion unit 102 and the main extrusion unit 101 are connected while the hemispherical closing unit 232 closes the first injection unit 131.

In this connection, it is preferable to apply a sealing unit to a one side member among both members combined each other to reinforce sealing between the first input unit 121 and the second input unit 122 or between the first input unit 121 and the replacement input unit 222.

According to the extrusion device capable of employing a composite input method according to an embodiment of the present disclosure configured as above, the processes of transferring, melting and extruding raw materials may be processed in one device, thereby greatly improving process efficiency. In particular, the main extrusion unit and the conical extrusion unit are designed as a separable and combinable structure, thereby flexibly responding to various raw materials and processing conditions.

In addition, by using the structure of the extrusion unit within the conical extrusion unit, the mixing and melting efficiency of raw materials is maximized, contributing to increasing the quality of a final product. The extrusion device is not configured separately from the main extrusion unit but has an integrated structure, thereby saving space and equipment costs.

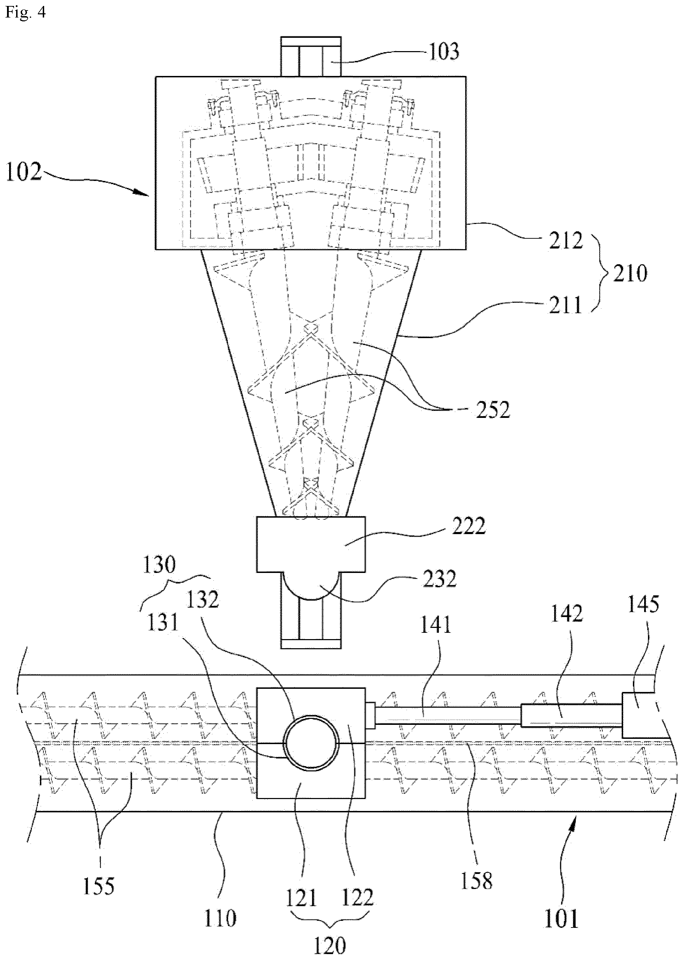

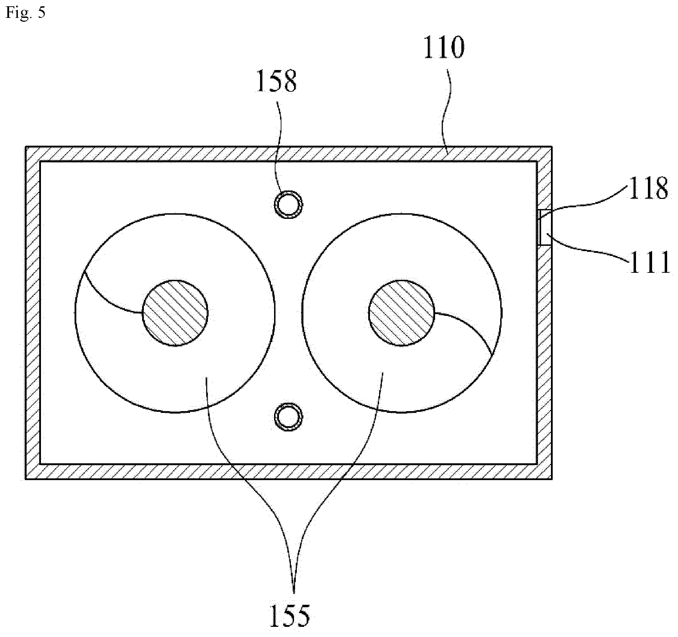

FIG. 4 is a plan view of a state in which a main extraction unit and a conical extrusion unit forming an extrusion device capable of employing a composite input method according to another embodiment of the present disclosure are separated. FIG. 5 is a longitudinal sectional view of the main extrusion unit of FIG. 4.

The extrusion device capable of employing a composite input method according to an embodiment of the present disclosure also includes the main extrusion unit 101 and the conical extrusion unit 102.

The main extrusion unit 101 is provided with the main body unit 110 in which a pair of extrusion screws 155 is installed therein along a lengthwise direction.

In addition, the conical extrusion unit 102 is disposed to be connected to the main extrusion unit 101 on one side of the main extrusion unit 101 as in the aforementioned embodiment.

As illustrated, according to an embodiment of the present disclosure, at least one ultrasonic heating unit 158 is provided vertically inside the main body unit 110 forming the main extrusion unit 101.

The ultrasonic heating unit 158 uses ultrasonic vibration to uniformly change the state of raw materials and heat the same. In other words, conventionally, there is a method of heating the extrusion unit by applying a heating unit such as using heat. However, the method of transferring heat through the heating unit as such has an issue of ununiformly melting raw materials due to a difference in temperature between a location around the heating unit within the case and a different location. However, ultrasonic heating addresses this issue and enables production of products of higher quality.

Herein, the ultrasonic heating unit 158 is efficiently disposed inside the main body unit 110, and the vibration generated through ultrasonic waves uniformly changes a minute structure of raw materials, which plays an important role in producing products with high strength and high durability.

According to an embodiment of the present disclosure, an instruction board 118 is provided on one side of the main body unit 110, and a transparent window unit 111 is provided on the other side of the instruction board 118.

The instruction board 118 coated with a thermochromic pigment that reversibly changes color depending on a temperature, and the transparent window unit 111 is made of reinforced plastic, glass or ceramic material having considerable heat resistance.

The instruction board 118 indicates through color whether the temperature inside the main body unit 110 is above a certain temperature, and the transparent window unit 111 plays a role in preventing a worker from being damaged.

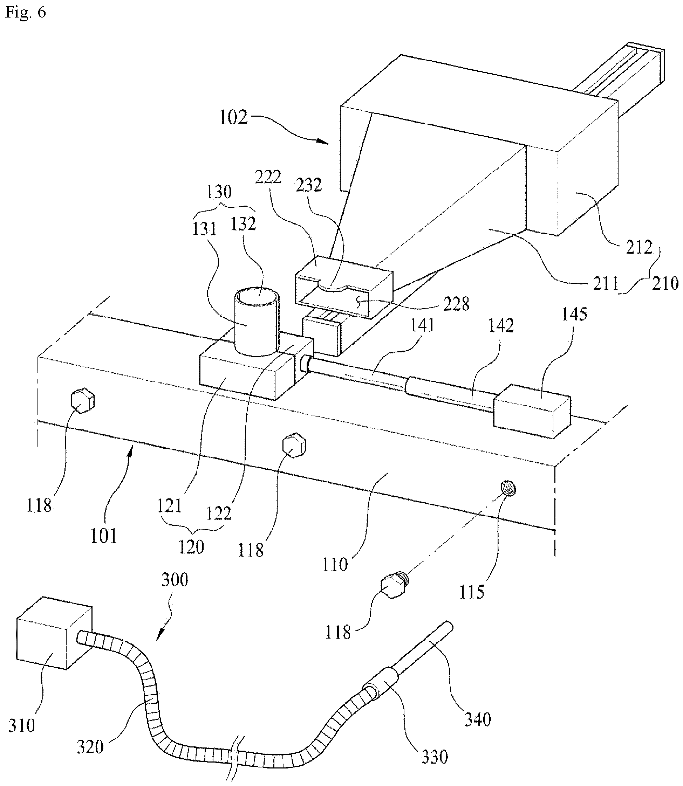

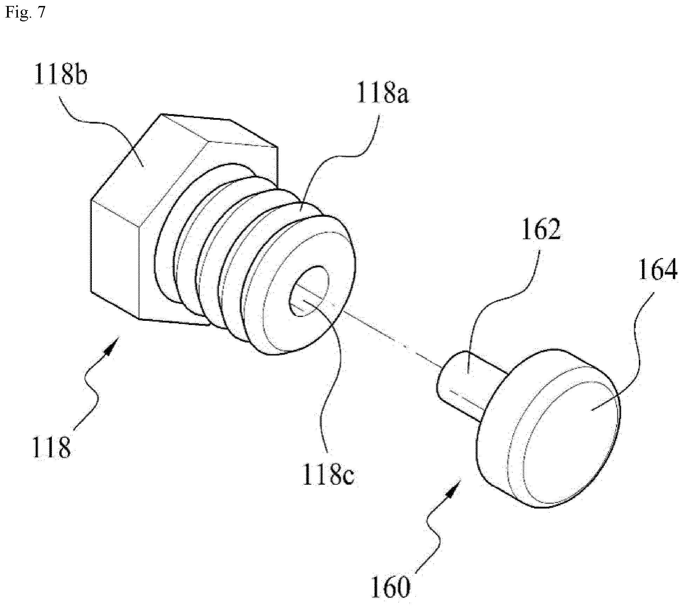

FIG. 6 is a perspective view of a state in which a main extraction unit and a conical extrusion unit forming an extrusion device capable of employing a composite input method according to yet another embodiment of the present disclosure are separated. FIG. 7 is a perspective view of a state in which an instruction module is combined with a closing bolt.

The extrusion device capable of employing a composite input method according to an embodiment of the present disclosure also includes the main extrusion unit 101 and the conical extrusion unit 102. Hereinafter, the following description focuses on a configuration different from the aforementioned embodiment.

According to an embodiment of the present disclosure, a plurality of through holes 115 are formed at regular intervals on a side portion of the main body unit 110.

In addition, there may be further provided a closing bolt 118 that closes the through hole 115.

The through hole 115 may be utilized to connect auxiliary devices when needed or as an interface to a heating or cooling system.

According to an embodiment of the present disclosure, there is provided a ultrasonic module 300 which is inserted into the through hole 115 and directly applies vibration to a material input into the main body unit 110.

The ultrasonic module 300 includes a power supply unit 310, a connection unit 320, an oscillation unit 330, and a ultrasonic phone unit 340. When necessary, the ultrasonic phone unit 340 may be directly inserted into the main body unit 110 through the through hole 115 to directly apply vibration and heat treatment to the material. Accordingly, it is possible to prevent malfunctions and improve the material mixing effect by a method such as removing materials that are entangled in the extrusion screw 155.

As in FIG. 7, the closing bolt 118 includes a screw unit 118a, a head unit 118b, and an insertion groove 118c provided in the screw unit 118a, and is provided with an instruction module 160 inserted into and fixed to the insertion groove 118c of the closing bolt 118.

The instruction module 160 includes a fixed protrusion 162 inserted into and fixed to the insertion groove 118c, and a tube unit 164 that is combined with the fixed protrusion 162 and contains an indicator liquid that melts at a certain temperature or above and emits a predetermined scent inside.

When the instruction module 160 as such is inserted into the closing bolt 118 and the instruction module 160 is fastened to be located inside the main body unit 110 through the through hole 115, it is possible to determine whether the main body unit 110 is heated to a preset temperature when the main body unit 110 is heated using the aforementioned ultrasonic method or other heating units. Some through holes 115 may be opened to further facilitate temperature check work.

In addition, the tube unit 164 is made of a transparent material, and a pigment containing a thermochromic pigment is mixed into the indicator liquid contained inside, so that when the closing bolt 118 is dismantled, the color of the pigment inside the tube unit 164 may be identified to determine whether the internal temperature is operating normally.

It should be understood by those skilled in the art to which the present disclosure pertains that the present disclosure may be embodied in other specific forms without changing the technical principles or essential characteristics of the present disclosure. Therefore, the embodiments described above should be regarded as being illustrative rather than restrictive in every aspect. The scope of the present disclosure is defined by the following claims rather than by the preceding description. It should be interpreted that all changes or modifications derived from the meaning and scope of the claims and their equivalents are included in the scope of the present disclosure.

### [Description of Reference Numerals]

100: extrusion device capable of employing a composite input method
101: main extrusion unit
102: conical extrusion unit
110: main body unit
120: material input unit
121: first input unit
122: second input unit
131: first injection unit
132: second injection unit
155: extrusion screw
210: case unit
222: replacement input unit
232: closing unit
252: conical screw

## Claims

1. An extrusion device 100 capable of employing a composite input method, the device 100 comprising:
a main body unit 110 that forms an exterior and has a material input unit 120 into which a material is input formed at an upper portion thereof;
a main extrusion unit 101 comprising a pair of extrusion screws 155 provided inside the main body unit 110; and
a conical extrusion unit 102 that is movably provided on one side of the main body unit 110 and selectively enables a raw material input into the material input unit 120.

2. The device 100 of claim 1, wherein:
the material input unit 120 is formed separably, is formed in a rectangular box shape as a whole when united, and is divided into a first input unit 121 and a second input unit 122 in which an interior space thereof is in communication with an interior space of the main body unit 110; and
when the first input unit 121 and the second input unit 122 are united, hemispherical first and second injection units 131, 132 formed in cylinder forms as a whole are provided in each of the first input unit 121 and the second input unit 122.

3. The device 100 of claim 1, wherein the main body unit 110 is provided with a piston unit and a cylinder unit connected to the second input unit 122 so that the second input unit 122 and the second injection unit 132 are separated from or combined with the first input unit 121 and the first injection unit 131.

4. The device 100 of claim 1, wherein an ultrasonic heating unit is provided inside the main body unit 110.

5. The device 100 of claim 4, the ultrasonic heating unit is provided in a plural number at predetermined intervals in a lengthwise direction of the main body unit 110.

6. The device 100 of claim 1, wherein the ultrasonic heating unit is provided at each of an upper side and a lower side inside the main body unit 110.

7. The device 100 of claim 4, wherein an instruction board coated with a thermochromic pigment that reversibly changes color depending on a temperature is provided at a preset position on a side portion of the main body unit 110.

8. The device 100 of claim 7, further providing a transparent cover unit that covers the instruction board.

9. The device 100 of claim 4, wherein a plurality of through holes is provided at regular intervals on a side portion of the main body unit 110.

10. The device 100 of claim 9, further providing a closing bolt that closes the through hole.
